# EUROPÄISCHE PATENTANMELDUNG

(11) **EP 1 493 721 A2**
(43) Veröffentlichungstag der Anmeldung: **05.01.2005**
(21) Anmeldenummer: 04015567.3
(22) Anmeldetag: 02.07.2004
(51) Int. Cl.: C04B 18/16, C04B 28/02

(54) **Hydraulische Bindemittelzusammensetzung zur Bodenverbesserung und Bodenstabilisierung**

(30) Priorität: 03.07.2003 DE 10330008
(71) Anmelder: HeidelbergCement AG, 69120 Heidelberg (DE)
(72) Erfinder: Noske, Peter, 69234 Dielheim (DE); Ketterer, Stefan, 69118 Heidelberg (DE); Jost, Etiennne, 69214 Eppelheim (DE); Dienemann, Wolfgang, 69256 Mauer (Baden) (DE)
(74) Vertreter: Wagner, Jutta, Dr.

(57) **Zusammenfassung**

Die vorliegende Erfindung betrifft eine hydraulische Bindemittelzusammensetzung zur Verbesserung und Stabilisierung von Böden für bautechnische Zwecke, die aus einem Prozessmehl/-staub oder einer Mischung von 2 bis mehreren Prozessmehlen/-stäuben, nämlich einer Mischung von:
a. Bypass-Staub und/oder Heißmehl mit
b. Rostdurchfall und/oder Zyklonstaub und/oder Wärmetauschermehl besteht und/oder Lepolofenmehl und/oder Klinkerstaub in einem Mischungsverhältnis von 100:0 bis 2:98 bestehen und Verfahren zu ihrer Anwendung.

## Beschreibung

Die Erfindung betrifft neue hydraulische Bindemittelzusammensetzungen zur Verbesserung und Stabilisierung von Böden für bautechnische Zwecke, bestehend aus einer Mischung von Prozessmehlen und -stäuben, im folgenden als "PMS" bezeichnet, aus der Zementherstellung, sowie Zement und/oder Bindemittel und/oder Hüttensand und/oder Flugasche, welche in variabler Mischung und Menge dem Boden zur Verbesserung zugesetzt werden.

Die verschiedenen Böden werden gemäß der DIN 18196 für bautechnische Zwecke in verschiedene Klassen eingeteilt. Gemäß dieser Norm werden die Bodenarten in Gruppen mit annähernd gleichem stofflichen Aufbau und ähnlichen bodenphysikalischen Eigenschaften wie:
Scherfestigkeit, Verdichtungsfestigkeit, Zusammendrückbarkeit, Durchlässigkeit, Witterungs- und Erosionsempfindlichkeit und Frostempfindlichkeit einerseits und andererseits in Hinblich auf ihre bautechnische Eignung z. B. als:
Baugrund für Gründungen, Baustoff für Erd- und Baustrassen, Baustoff für Straßen- und Bahndämme, Baustoff für Erdstaudämme (Dichtung und Stützkörper), Baustoff für Drainagen zusammengefasst. Innerhalb einer Klassifikationsgruppe können die jeweiligen Eigenschaften bei feinkörnigen und gemischtkörnigen Bodenarten je nach Lagerungsdichte unterschiedlich sein.

Zur Verwendung für bautechnische Zwecke sind normalerweise grobkörnige und mittelkömige bzw. gemischtkörnige Böden von Vorteil, wie sie in den Gruppen GE bis ST der DIN 18196 zusammengefasst sind. Feinkörnige, insbesondere größere Mengen organische Bestandteile enthaltende Böden der Klassifizierung UL bis F sind dagegen normalerweise weniger gut geeignet, da sie zu plastisch sind und ein zu hohes Wasserrückhaltevermögen aufweisen.

Es ist bekannt, dass man die Bodenqualität verbessern kann, wenn man in den Boden hydraulische Bindemittel, insbesondere Zement einarbeitet, welcher im Stande ist die feinen Körner des Bodens zu größeren Aggregaten zu verbinden, um dadurch die Qualität eines grobkörnigen Bodens zu erzeugen. Insbesondere bei sauren oder stark wasserhaltigen, plastischen Böden wird zusätzlich noch ein Anteil an gebranntem Kalk zugegeben, welcher im Stande ist, die aus organischen Bestandteilen entstandenen Säuren zu neutralisieren und gegebenenfalls einen Teil des Wassers chemisch zu binden.

Bei der Herstellung von Zement fallen während des Brennprozesses in einem dafür verwendeten, geeigneten Ofensystem Prozessmehle und -stäube an. Es handelt sich um sehr feine Partikel, die in den Brenngasen des Ofens mitgerissen werden, außerhalb des Ofensystems transportiert, dort separiert und gesammelt werden.
Da sich Prozessmehle und -stäube überall entlang des Brennprozesses bilden, bestehen sie aus einer Kombination von Materialien aus den verschiedenen Phasen des Brennprozesses:
relativ inertes Material aus der Dehydratation des Ausgangsmaterials und reaktives Material aus der Calcinierung und Klinkerisation des Ausgangsmaterials. Des weiteren enthalten Prozessmehle und -stäube Bestandteile aus den Roh- und
Brennstoffen, die sich bei den hohen Temperaturen verflüchtigt haben und bei der Abkühlung der Ofenabgase auf den Prozessmehlen und -stäuben kondensieren. Diese Prozessmehle und -stäube, die je nach Verfahren bis zu 20 % der Klinkerausbeute ausmachen können, werden teilweise in den Zementherstellprozess zurückgeführt (vor den Brennvorgang, oder als Nebenbestandteil dem gemahlenen Klinker, zur Herstellung von Zement und/oder Bindemitteln beigefügt).

Es wurde nun überraschend gefunden, dass solche Prozessmehle und -stäube sich zur Bodenverbesserung- und Bodenstabilisierung gut eignen, wenn man sie in geeigneter Weise miteinander und gegebenenfalls mit Zement und/oder Bindemittel mischt, und sie auf den jeweiligen zu verbessernden Boden anpasst. Zusätzlich können solche Produkte noch Hüttensand und/oder Flugasche enthalten.

Die bei der Zementproduktion anfallenden Prozessmehle und -stäube werden je nach den verwendeten Roh- und Brennstoffen, dem verwendeten Ofentyp und dem jeweiligen Ort im Ofensystem an dem sie anfallen, eine unterschiedliche Zusammensetzung aufweisen.

In den beigefügten Figuren sind schematisch übliche Zementdrehrohrofensysteme abgebildet.

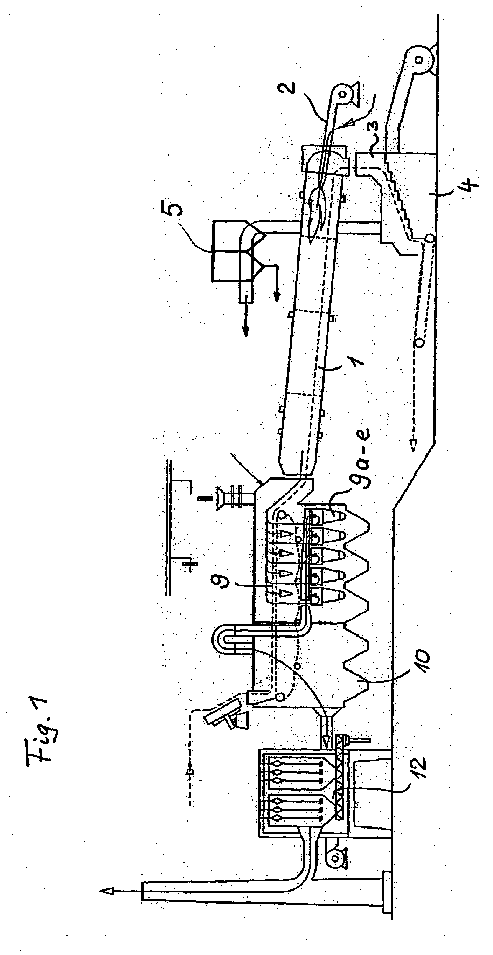

Figur 1 zeigt einen Wärmetauscherofen mit dem zentralen Drehrohrofen 1, an dessen linken Auslass der Brenner 2, der Klinkerschacht 3 und die Klinkerkühlung 4 angeordnet ist, aus der ein Teil der Abluft über den Klinkerschacht 3 in die Brennzone geleitet wird. Am rechten Einlass ist die Rohmehlzuführung 6 angeordnet, wobei das Rohmehl in einen vierstufigen Zyklonvorwärmer (4a-4d) im Gegenstrom zu den heißen, aus dem Ofen austretenden Brenngasen geführt wird. Ein Teil der austretenden Gase, die einen hohen Anteil an flüchtigen Bestandteilen (Alkalien, Chloride, Schwefel und Schwermetalle) enthalten, wird im Bypass 7 vom salzangereicherten Staub befreit und abgeleitet. Die aus der Zyklonstufe 4a austretenden Gase werden in einem Elektroabscheider 8 von enthaltendem Staub befreit. Die Rohmehlaufgabe erfolgt in die Abluft des Zyklons 4b, vor dessen Einführung in den Zyklon 4a. In dem Bild der Zyklonstufen zeigen die durchgezogenen Pfeile jeweils den Gasstrom, die gestrichelten Linien den Feststoffstrom.

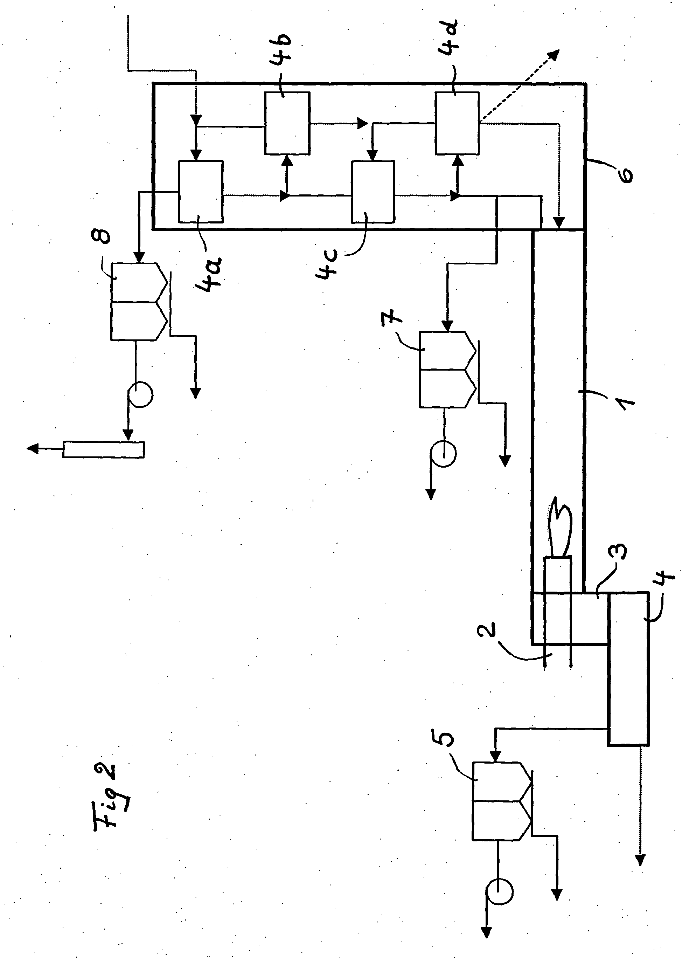

Figur 2 zeigt einen Lepolofen (Lelep-Polysius-System), der in gleicher Weise wie in Figur 1 einen Drehrohrofen 1, Brenner 2, Klinkerschacht 3, Klinkerkühler 4 und einen Klinkerstaubabscheider 5 aufweist. Die Rohmehlvorwärmung erfolgt bei dieser Bauart durch eine Zwangsführung des heißen Brenngases aus dem Ofen 1 durch das Materialbett, das mit dem Lepolrost 9 zum Ofen gefördert wird. Die Abgase werden nach einer Zwischenreinigung in den Zyklonen (9a-9d) in der Trockenkammer 10 zum Vorwärmen des über einen Granulierteller 11 zugeführten Rohmehls verwendet, bevor sie in einem Elektrofilter 12 von Reststaub befreit und abgeführt werden.
Die erfindungsgemäßen Prozessmehle und -stäube (im folgenden auch als PMS 1-7 bezeichnet) fallen an folgenden Stellen an:
1. Bypassstaub (PMS 1) im Abscheider 7 des Wärmetauscherofens.
2. Heißmehl (PMS 2) am Ausgang 4d des Rohmehlvorwärmers des Wärmetauscherofens oder am Ausgang des Lepolrostes 9 des Lepolofens.
3. Rostdurchfall (PMS 3) am Boden des Lepolrostes 9 des Lepolofens.
4. Zyklonstaub (PMS 4) in den Zyklonen 9a-9e im Lepolofen.
5. Staub aus der Elektrogasreinigung 8 (EGR) des Wärmetauscherofens (PMS 5).
6. Staub aus der Elektrogasreinigung aus dem Elektrofilter 12 des Lepolofens (PMS 6).
7. Klinkerstaub (PMS 7) aus der Gasreinigung nach Klinkerkühler.

Die erfindungsgemäße Zusammensetzung der Mischung bezieht sich auf ein einzelnes Prozessmehl oder -staub, oder auf ein Gemisch aus 2 bis mehreren Prozessmehlen und/oder -stäuben.

Die Zusammensetzung der verschiedenen Prozessmehle und -stäube ist in der Tabelle 1 zusammengefasst.

**Tabelle 1**

| | **CaO** | **SiO**_{**2**} | **Al**_{**2**}**O**_{**3**} | **Fe**_{**2**}**O**_{**3**} | **K**_{**2**}**O** | **Na**_{**2**}**O** | **MgO** | **Cl** | **SO**_{**3**} | **fr. CaO**_{**mittel**} |
|---|---|---|---|---|---|---|---|---|---|---|
| **PMS 1** | 4,0 - 60,2 | 0,4 - 17,9 | 0,2 - 5,2 | <0,1 - 2,5 | 3,8 - 48,0 | <0,1 - 2,3 | 0,4 - 2,0 | 1,6 - 20,7 | 0,9 - 24,0 | 2,0 - 10,5 |
| **PMS 2** | 56,8 - 63,1 | 15,3 - 18,7 | 4,9 - 5,9 | 2,0 - 2,4 | 2,1 - 5,5 | <0,1 - 0,4 | 2,1 - 3,0 | 0,4 - 2,1 | 4,0 - 9,9 | 20,40 |
| **PMS 3** | 39,6 - 63,0 | 14,7-20,6 | 3,6 - 5,2 | 1,6-2,7 | 0,9 - 2,8 | 0,2 - 0,3 | 1,8 - 3,0 | <0,1 - 0,3 | 1,0 -10,1 | 1,84 |
| **PMS 4** | 43,0 - 50,0 | 16,7 - 19,0 | 4,3 - 5,2 | 2,1 - 3,2 | 2,8 - 8,2 | 0,3 - 0,9 | 1,9 - 3,2 | <0,1 - 1,4 | 5,1 - 9,8 | 7,31 |
| **PMS 5** | 6,2 - 66,5 | 0,6 - 25,8 | 0,9 - 7,9 | 0,9 - 4,7 | 0,3 - 1,6 | <0,1 - 0,6 | 0,5 - 3,2 | <0,1 - 2,5 | 0,2 - 40,6 | |
| **PMS 6** | 8,0 - 34,4 | 1,5 - 13,4 | 0,8 - 3,7 | 1,2 - 1,7 | 9,5 - 36,0 | 0,4 - 1,6 | 1,0 - 2,4 1,1 | - 5,6 | 10,1 - 40,0 | 0,14 |
| **PMS7** | 52,5-63,4 | 1 8,3 - 21 ,8 | 4,2 - 7,1 | 1,5-3,3 | 1,0-1,6 | <0,1 - 1,1 | 0,6 - 2,8 | <0,1 - 2,2 | 1,1-8,2 | 1,1 |

Chemismus der Prozessmehle und -stäube PMS 1-7.

Tabelle 1 zeigt, dass sich die Prozessmehle und -stäube PMS 1-7 deutlich unterscheiden, wie z.B. im Gehalt an freiem CaO. Die Unterschiede in der Zusammensetzung werden erfindungsgemäß genutzt, um eine bestmögliche Anpassung der Bindemittelzusammensetzung an die verschiedenen Bodentypen zu ermöglichen.

Je nach Herkunftsort, verwendeten Rohstoffen und Brennmaterialien können die Prozessmehle und -stäube PMS 1-7 unterschiedliche Zusammensetzungen aufweisen.
Daher werden aus unterschiedlichen Herkunftsorten die Prozessmehle und -stäube PSM 1-7 als Komponenten in einer Zementmischanlage zusammengeführt, die aufgrund ihrer Zusammensetzung unter Umweltaspekten unbedenklich einsetzbar sind, während andere Prozessmehle und -stäube für den Anwendungszweck ungeeignet sind.

Die verschiedenen Prozessmehle weisen Feinheiten von 2.500 cm²/g - 20.000 cm²/g auf. Die hydraulischen Bindemittel werden ebenfalls in möglichst feinteiliger Form, d.h. mit spezifischen Oberflächen zwischen 2.500 cm²/g bis 20.000 cm²/g verwendet, um eine möglichst gleichmäßige und schnelle Verteilung im Boden sicherzustellen. Günstigenfalls ist die Feinheit der Prozessmehle und -stäube mit der des hydraulischen Bindemittels zu korrelieren, so das ein stetiger Kornaufbau entsteht. Spezifische Oberflächen von 3.000 cm²/g bis 6.000 cm²/g haben sich als besonders geeignet herausgestellt.

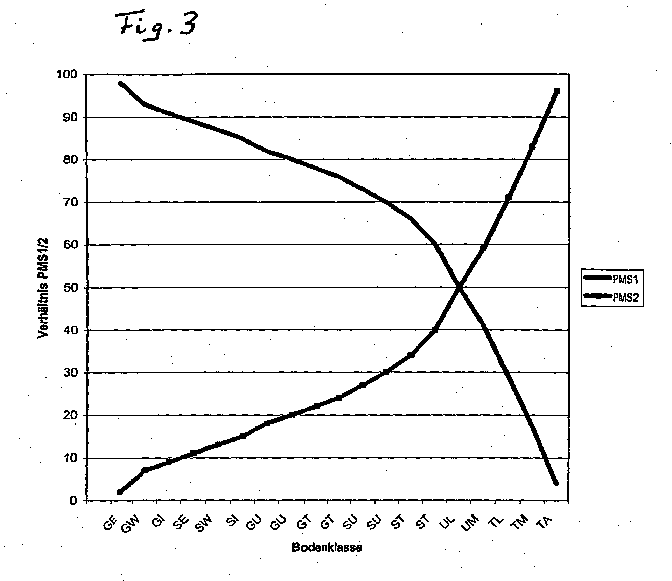

Die Figur 3 zeigt in welcher Relation die Prozessmehle und -stäube PMS 1 und PMS 2 dem Boden je nach Klassifizierung zugesetzt werden müssen, um diese in technisch brauchbare Untergründe umzuwandeln. Es wird beispielhaft gezeigt das die Prozessmehle und -stäube PMS 1 und PMS 2 bei grobkörnigen Böden und feinkörnigen Böden unterschiedlichen Wechselwirkungen unterliegen.

Durch die hydraulischen Reaktionen der Prozessmehle und -stäube in Verbindung mit Zement (beispielsweise CEM I) werden unterschiedlich deutliche bis starke adhesive bis kohesive Effekte im Boden hervorgerufen. Mischungsverhältnisse von Prozessmehl- und -staub zu Zement von 5:95 bis 60:40 haben sich als besonders vorteilhaft erwiesen und sind praktisch für jede Bodenklasse geeignet.

Solche Mischungen zeigen Vorteile in der Anwendung (z.B. rasche Festigkeitsentwicklung) und Wirtschaftlichkeit (Dosierungsvorteile, geringerer CO₂-Ausstoß) gegenüber konventionellen Kalk-/Zementgemischen.

Die Beimischung der Prozessmehle und -stäube PMS 3-7 unterstützt insbesondere den Effekt der physikalischen und chemischen Wasserbindung und erlaubt eine zusätzliche Anpassung der Mischung an die Verarbeitbarkeit des Boden-Bindemittelgemisches. Insbesondere können durch Zumischung solcher Produkte auch wasserhaltige Böden mit 5-40% Wasser noch gut verarbeitet werden (siehe Tabelle 2).
Eine Hydrophobierung des Bindemittelgemisches für die Anwendung in der Praxis ist nicht erforderlich.

**Tabelle 2**

| **H**_{**2**}**O in M.-%** | **PMS 3** | **PMS 4** | **PMS 5** | **PMS 6** | **PMS 7** |
|---|---|---|---|---|---|
| 40 | 8 | - | 28 | 37 | 92 |
| 35 | 10 | - | 32 | 41 | 84 |
| 30 | 11 | 100 | 35 | 43 | 69 |
| 25 | 13 | 81 | 37 | 45 | 54 |
| 20 | 15 | 66 | 43 | 53 | 35 |
| 15 | 17 | 57 | 54 | 65 | 26 |
| 10 | 23 | 43 | 70 | 87 | 10 |
| 5 | 50 | 22 | 100 | 100 | - |
| 0 | 50 | 22 | 100 | 100 | - |

Zuordnung der Prozessmehle und -stäube PMS 3-7 zu den Gehalten des Bodenwassers, für günstigste Verdichtbarkeit. Angaben in M.-% bezogen auf Masse des Gemisches PMS 1/2.

Die erfindungsgemäßen Bindemittelmischungen werden vorzugsweise durch getrenntes Vermahlen der Komponenten und nachträgliches Vermischen in einer üblichen Zementmischanlage hergestellt. Diese Prozessführung erlaubt es insbesondere die Zusammensetzung der Mischung an die jeweiligen Erfordernisse (des Bodens und Anforderungen des Anwenders) anzupassen.

Um die optimalen Mischungsverhältnisse zu bestimmen wird zunächst die Bodenklassifikation nach DIN 18196 bestimmt, d.h. insbesondere Kornaufbau, Mineralogie, Wassergehalt, und festgelegt, in welchem Maße eine Stabilisierung bzw. Agglomeration der Bodenbestandteile erforderlich ist.

Entsprechend dieser Bodenklassifikation wird der notwendige Gehalt von Prozessmehlen und -stäuben PMS 1 und PMS 2 bestimmt und in einem weiteren Schritt die Menge der Prozessmehle und -stäube PMS 3-7 entsprechend dem Wassergehalt, und den geforderten Eigenschaften des Bodens bestimmt und der Mischung im erforderlichen Maße beigefügt.

Danach wird bestimmt, wie viel Zement und/oder Bindemittel und/oder Hüttensand und/oder Flugasche technisch sinnvoll und erforderlich zuzumischen ist und auch diese Menge der Gesamtmenge zugefügt.

Alle Komponenten werden in einer Mischanlage gründlich vermischt und als Pulvermischung auf den Boden aufgebracht. Das Bindemittel wird in einer Menge von 10 - 500 kg/t vorzugsweise 50 - 100 kg/t Boden eingebracht.

Die Einarbeitung der Pulvermischung in den Boden erfolgt nach gängigen Verfahrenstechniken, beispielsweise Frästechnik, Mixed-on-site Technik, Mixed-in-place Technik oder Zentralmischverfahren.

Die verwendeten Zemente, welche üblicherweise eine Mahlfeinheit von 2.500 cm²/g - 6.000 cm²/g, vorzugsweise 3.000 - 4.500 cm²/g aufweisen, können mit oder ohne Sulfatträger vermahlen sein.

## Patentansprüche

1. Hydraulische Bindemittelzusammensetzung zur Verbesserung und Stabilisierung von Böden für bautechnische Zwecke, **dadurch gekennzeichnet, dass** sie aus einem Prozessmehl/-staub oder einer Mischung von 2 oder mehreren Prozessmehlen/-stäuben, nämlich einer Mischung von:
a. Bypass-Staub und/oder Heißmehl mit
b. Rostdurchfall und/oder Zyklonstaub und/oder Wärmetauschermehl und/oder Lepolofenmehl und/oder Klinkerstaub in einem Mischungsverhältnis von a : b im Bereich von 100:0 bis 2:98 bestehen.

2. Hydraulische Bindemittelzusammensetzung gemäß Anspruch 1, **dadurch gekennzeichnet, dass** sie zusätzlich gemahlenen Zement und/oder Bindemittel in einem Mengenverhältnis von Prozessmehl/-staub : Zement und/oder Bindemittel von 5:95 bis 95:5 insbesondere von 5:95 bis 60:40 enthalten.

3. Hydraulische Bindemittelzusammensetzung gemäß Anspruch 1 oder 2, **dadurch gekennzeichnet, dass** die Mischung zusätzlich bis zu 95 M.-% Hüttensand und/oder Flugasche enthält.

4. Hydraulische Bindemittelzusammensetzung gemäß einem der Ansprüche 1 bis 3, **dadurch gekennzeichnet, dass** für grobkörnige Böden ein hoher Anteil an Bypassstaub und für feinkörnige Böden ein hoher Anteil an Heißmehl enthalten ist, und die Komponenten b. umso stärker enthalten sind je trockener der Boden ist.

5. Hydraulische Bindemittelzusammensetzung gemäß einem der Ansprüche 1 bis 4, **dadurch gekennzeichnet, dass** die Komponenten eine Mahlfeinheit von 2.500 cm²/g bis 20.000 cm²/g aufweisen.

6. Hydraulische Bindemittelzusammensetzung gemäß einem der Ansprüche 1-5, **dadurch gekennzeichnet, dass** der Calcinierungsgrad der Prozessmehle und - stäube 10-90 % beträgt.

7. Verfahren zur Verbesserung und Stabilisierung von Böden, **dadurch gekennzeichnet, dass** man dem Boden ein Bindemittel gemäß einem der Ansprüche 1 bis 6 zusetzt.

8. Verfahren gemäß Anspruch 7, **dadurch gekennzeichnet, dass** man das Bindemittel in einer Menge bis zu 500 kg pro t/Boden zusetzt.

9. Verfahren nach Anspruch 7 oder 8, **dadurch gekennzeichnet, dass** das Bindemittel als trockenes Pulver untergefräst oder durch Mixed-in-place oder Mixed-on-site Verfahren oder Zentralmischverfahren mit dem Bodenmaterial vermischt wird.

10. Hydraulische Bindemittelzusammensetzung gemäß Anspruch 1, **dadurch gekennzeichnet, dass** die Prozessmehle und -stäube die folgende Zusammensetzung aufweisen:
| | **CaO** | **SiO**_{**2**} | **Al**_{**2**}**O**_{**3**} | **Fe**_{**2**}**O**_{**3**} | **K**_{**2**}**O** | **Na**_{**2**}**O** | **MgO** | **Cl** | **SO**_{**3**} | **fr. CaO**_{**mittel**} |
|---|---|---|---|---|---|---|---|---|---|---|
| **Bypass-Staub** | | | | | | | | | | |
| **PMS 1 Heißmehl** | 4,0 - 60,2 | 0,4 - 17,9 | 0,2 - 5,2 | <0,1 - 2,5 | 3,8 - 48,0 | <0,1 - 2,3 | 0,4 - 2,0 | 1,6 - 20,7 | 0,9 - 24,0 | 2,0 - 10,5 |
| **PMS 2 Rost-durch-fall** | 56,8 - 63,1 | 15,3 - 18,7 | 4,9 - 5,9 | 2,0 - 2,4 | 2,1 - 5,5 | <0,1 - 0,4 | 2,1 - 3,0 | 0,4 - 2,1 | 4,0 - 9,9 | 20,40 |
| **PMS 3 Zyklonstaub** | 39,6-63,0 | 14,7 - 20,6 | 3,6 - 5,2 | 1,6 - 2,7 | 0,9 - 2,8 | 0,2 - 0,3 | 1,8 - 3,0 | <0,1 - 0,3 | 1,0 - 10,1 | 1,84 |
| **PMS 4 Wärmetauscherm ehl** | 43,0 - 50,0 | 16,7 - 19,0 | 4,3 - 5,2 | 2,1 - 3,2 | 2,8 - 8,2 | 0,3 - 0,9 | 1,9 - 3,2 | <0,1 - 1,4 | 5,1 - 9,8 | 7,31 |
| **PMS 5 Lepolofenmehl** | 6,2 - 66,5 | 0,6 - 25,8 | 0,9 - 7,9 | 0,9 - 4,7 | 0,3 - 1,6 | <0,1 - 0,6 | 0,5 - 3,2 | <0,1 - 2,5 | 0,2 - 40,6 | |
| **PMS 6 Klinkerstaub** | 8,0 - 34,4 | 1,5 - 13,4 | 0,8-3,7 | 1,2 - 1,7 | 9,5 - 36,0 | 0,4 - 1,6 | 1,0 - 2,4 | 1,1 - 5,6 | 10,1 - 40,0 | 0,14 |
| **PMS 7** | 52,5-63,4 | 18,3 - 21,8 | 4,2 - 7,1 | 1,5 - 3,3 | 1,0 - 1,6 | <0,1 - 1,1 0,6 - 2,8 <0,1 - 2,2 1,1 - 8,2 | | | | 1,1 |
